# EUROPÄISCHE PATENTSCHRIFT

(11) **EP 1 738 446 B1**
(45) Veröffentlichungstag und Bekanntmachung des Hinweises auf die Patenterteilung: **14.09.2011**
(21) Anmeldenummer: 04725607.8
(22) Anmeldetag: 03.04.2004
(51) Int. Cl.: H02B 1/28, H02B 1/56, B29C 45/72

(54) **WASSERGEKÜHLTE STEUEREINRICHTUNG FÜR EINE SPRITZGIESSMASCHINE**
WATER-COOLED CONTROL DEVICE FOR AN INJECTION MOLDING MACHINE
DISPOSITIF DE COMMANDE REFROIDI PAR EAU POUR MACHINE DE MOULAGE PAR INJECTION

(43) Veröffentlichungstag der Anmeldung: 03.01.2007
(73) Patentinhaber: KraussMaffei Technologies GmbH, 80997 München (DE)
(72) Erfinder: GRIMM, Günther, 86567 Hilgertshausen (DE)
(74) Vertreter: Wilhelm, Ludwig
(86) Internationale Anmeldenummer: PCT/EP2004/003572
(87) Internationale Veröffentlichungsnummer: WO 2005/107029

(56) Entgegenhaltungen:
- DE-A- 4 413 130
- DE-A- 19 831 483
- "Klimatisierungslösungen" [Online] 30. April 2003 (2003-04-30), , XP002308769 Gefunden im Internet: URL:http://www.ibh.de/nfindex/download/pdf /5_3030/vortrag-rittal-klimatisierung-2003 0429.pdf> [gefunden am 2004-12-02] Seite 11 Seiten 28-32

## Beschreibung

Die Erfindung betrifft eine Steuereinrichtung für eine Spritzgießmaschine gemäß dem Oberbegriff des Patentanspruchs 1.

Eine Steuereinrichtung einer Spritzgießmaschine umfasst in der Regel eine CPU-Einheit, ein Netzteil zur Stromversorgung und eine Anzeigeeinheit zur Visualisierung von Betriebsdaten der Spritzgießmaschine. Diese Teile der Steuereinrichtung sind aus Schutz vor schädlichen Einflüssen der Umgebung in einem Gehäuse untergebracht, das bestimmte, genormte Schutzarten bzw. Gehäuseschutzvorschriften erfüllen muss. Typischerweise müssen die einzelnen Teile der Steuereinrichtung in einem spritzwassergeschützten Gehäuse untergebracht werden, beispielsweise in einem Bedienterminal oder in einem Schaltschrank, der die IP-Schutzart IP X4, d.h. spritzwassergeschützt im Sinne dieser Norm erfüllt (IP-Code für Berührungs-, Fremdkörper- und Wasserschutz für elektrische Betriebsmittel gemäß Europanorm EN 60529 und DIN VDE 0470-1).

Zur Einhaltung der zuvor genannten Normen wurde bislang die im Inneren des Gehäuses der Steuereinrichtung entstehende Wärme mit Hilfe von Lüftern im Innern verteilt und über Konvektion aus dem Gehäuse abgeführt. Für eine effektive Konvektion benötigt man eine deutliche Temperaturdifferenz zwischen Innentemperatur und Außentemperatur. Der Einbau von Lüftern in die Gehäusewand, um die Wärme aus dem Innern des Gehäuses nach aussen abzuführen, ist im Hinblick auf die Einhaltung der vorstehenden Normen nicht ohne weiteres möglich.

Aus der DE 198 31 483 A1 ist eine Spritzgießmaschine bekannt, die eine mittels eines Hydaulikmediums betriebene hydraulische Antriebseinheit, eine Pumpe zum Umwälzen und Fördern des Hydraulikmediums sowie mehrere zu temperierende Einheiten aufweist, wobei das Hydraulikmedium zugleich als Temperiermedium verwendet wird.

Bei den zu temperierenden Einheiten handelt es sich zum Beispiel um eine Steuerungskomponente für den Motor der Pumpe, eine Steuerungskomponente für den Motor einer elektromechanischen Antriebseinheit, einen Schaltschrank, eine elektromechanische Antriebseinheit in Form eines Spindelsystems oder eine Getriebeeinheit.

Aufgabe der vorliegenden Erfindung ist es daher, eine Steuereinrichtung für eine Spritzgießmaschine anzugeben, bei der das sichere Abführen der Verlustwärme einer Steuerungselektronik in einem Gehäuse unabhängig von der Umgebungstemperatur und unter Einhaltung der Gehäuseschutzvorschriften gewährleistet ist.

Diese Aufgabe wird durch die im Anspruch 1 angegebenen Merkmale gelöst.

Demgemäß ist bei einer Steuereinrichtung für eine Spritzgießmaschine, bei der die einzelnen Teile der Steuereinrichtung in einem wassergeschützten Gehäuse angeordnet sind, eine Pumpe mit zumindest einer in dem wassergeschützten Gehäuse angeordneten Kühlplatte vorgesehen. Außerhalb des Gehäuses ist ein Kühler mit einem Ventilator angeordnet. Der Kühler, die Pumpe und die zumindest eine Kühlplatte sind über einen Kühlkreislauf miteinander verbunden. Die Pumpe kann innerhalb oder ausserhalb des wassergeschützten Gehäuses vorgesehen werden.

Bei der erfindungsgemäßen Steuereinrichtung ist es ohne weiteres möglich, die geforderten Schutzvorschriften für Steuerungen von Spritzgießmaschinen bzw. deren Gehäuse zu erfüllen. Durch die Trennung von Pumpe und Kühler lässt sich der Kühler ohne weiteres außerhalb des Gehäuses der Steuerung anbringen, ohne damit auch die Pumpe auslagern zu müssen. Überdies ist es nicht zwingend erforderlich, die zumindest eine Kühlplatte an einem Bauteil der Steuerung anzuordnen. Dies kann - gemäß einer bevorzugten Ausführungsform - zwar der Fall sein. Jedoch kann die Kühlplatte auch irgendwo im Gehäuse als Kühlelement vorgesehen werden. Gegebenenfalls können zusätzlich zu den Kühlplatten an den Bauteilen der Steuerung auch eine oder mehrere weitere Kühlplatten im Innern des Gehäuses vorgesehen werden, die an den Kühlkreislauf angeschlossen sind.

Durch den Einsatz eines Kühlers mit Ventilator ist es überdies möglich, eine größere Kühlleistung zu erreichen, so dass auch bei nicht zu großen Temperaturdifferenzen zwischen Innen- und Außentemperatur des Gehäuses eine ausreichende Kühlung sichergestellt werden kann.

Bei einer Steuereinrichtung einer Spritzgießmaschine ist an der Außenseite des Gehäuses oder integriert in dieses oftmals eine Anzeigeeinheit vorhanden, die ebenfalls eine gewisse Wärmeentwicklung herbeiführt. Hier kann es vorteilhaft sein, an der Anzeigeeinheit eine eigene Kühlplatte anzubringen.

Falls die eigentliche Steuereinrichtung in einem Schaltschrank untergebracht ist und an der Spritzgießmaschine nur noch ein Bedienterminal mit einer Anzeigeeinheit und einer Tastatur vorhanden ist, das über solche elektronische Bauelemente verfügt, die keine nennenswerte Wärmeentwicklung aufweisen (die CPU für die Steuerung der Spritzgießmaschine selbst befindet sich in diesem Fall im Schaltschrank), ist der Kühlkreislauf sinnvollerweise in den wassergeschützten Schaltschrank zu integrieren. Gegebenenfalls kann für das separate Bedienterminal zusätzlich ein eigener Kühlkreislauf vorgesehen werden. Bedarfsweise können die Steuereinrichtung im Schaltschrank und das separate Bedienterminal an einen gemeinsamen Kühlkreislauf angeschlossen werden.

Sollte ein Aüsgleichsgefäß für das Kühlmittel vorgesehen sein, so kann dies auch außerhalb des Gehäuses, insbesondere separat von dem Kühler vorgesehen sein.

Ein Durchflussmesser im Kühlkreislauf gestattet die Überwachung der Kühlung auf Funktionsfähigkeit. Durch Erzeugen eines elektrischen Signals und Überwachen des Signals kann ein eventueller Ausfall der Kühlung festgestellt werden. Um auf die verschiedene Kühlanforderungen reagieren zu können, kann die Pumpe vorzugsweise regelbar ausgebildet sein. Die Regelung der Pumpe kann in verschiedener Weise betrieben werden. Beispielsweise könnte die Temperatur des Kühlmediums ermittelt und in Abhängigkeit von der Temperatur die Regelung der Pumpe betrieben werden.

Die vorliegende Erfindung soll nachfolgend anhand von Ausführungsbeispielen und mit Bezug auf die beigefügten Figuren näher erläutert.

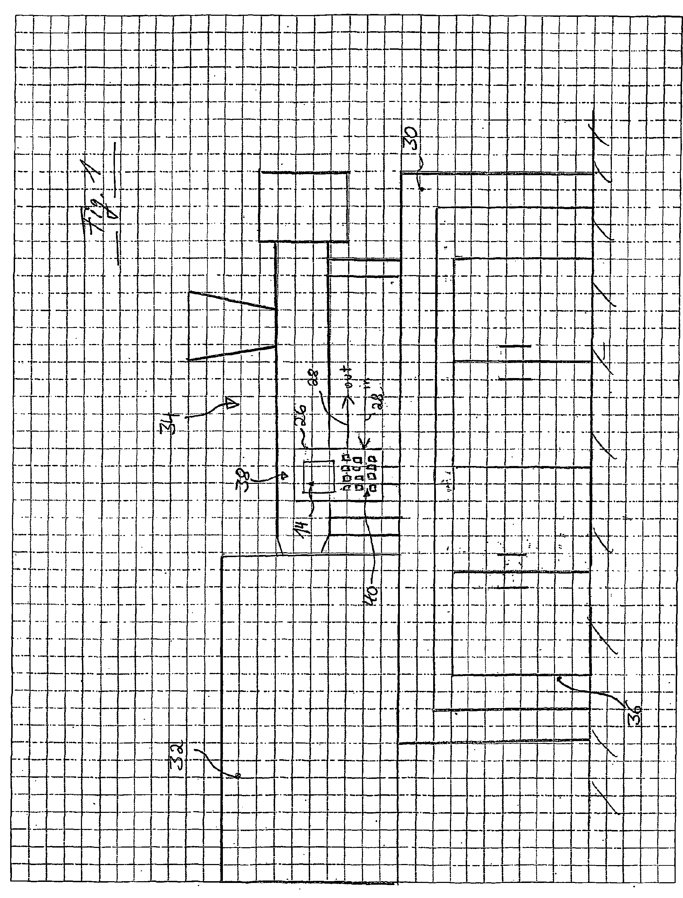

Figur 1 zeigt schematisch eine Spritzgießmaschine mit einem Maschinenbett 30, auf dem eine Schließeinheit 32 und eine Plastifzier- und Einspritzeinheit 34 abgestützt sind. Unterhalb des Maschinenbetts befindet sich ein Schaltschrank 36, in dem elektrische, elektronische und/oder elektromechanische Bauteile wie zum Beispiel Sicherungen, Relais, Umrichter, Transformatoren, Netzteile, Steuerungen usw. untergebracht sind. Desweiteren weist die Spritzgießmaschine ein in Augenhöhe angeordnetes Bedienterminal 38 mit einer Anzeigeeinheit 14 und einer Tastatur 40, beispielsweise eine Soft-Key-Tastatur, auf.

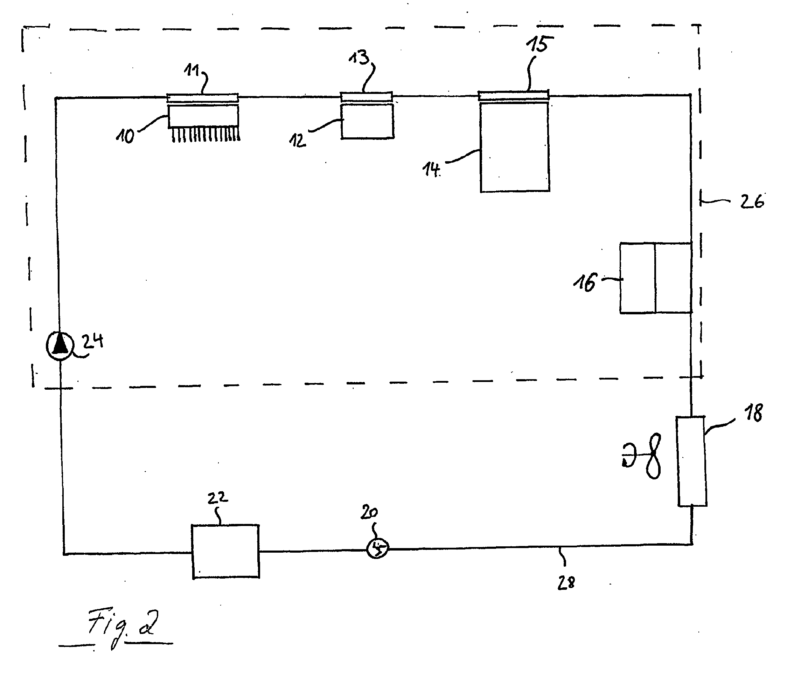

In einer ersten Variante ist die Steuereinrichtung in dem Bedienterminal 38 untergebracht. Ein schematisches Blockschaltbild der erfindungsgemäßen wassergekühlten Steuereinrichtung ist in der Figur 2 dargestellt. Eine Spritzgießmaschine besitzt in der Regel eine Steuereinrichtung, welche zumindest eine CPU-Einheit 10 und weitere elektronische Elemente aufweist. Gegebenenfalls kann auch ein Netzteil in der Steuereinrichtung vorgesehen sein. Vorliegend sind die CPU-Einheit 10 zusammen mit einer Festplatte 12 und der Anzeigeeinheit 14 dargestellt, die in einem Gehäuse 26 des Bedienterminals 38 aufgenommen sind. Natürlich sind in dem Gehäuse 26 noch weitere Bauelemente aufgenommen. Hier werden jedoch nur die zu kühlenden Bauelemente der Steuerung selbst stark schematisch dargestellt. Aus Gründen der Betriebssicherheit ist es erforderlich, dass das Gehäuse 26 wassergeschützt ist, mindestens tropfwassergeschützt gemäß der Norm IP X1, vorzugsweise mindestens spritzwassergeschützt gemäß IP X4.

Das Kühlsystem umfasst einen Kühlkreislauf 28, in dem vorliegend nacheinander eine Pumpe 24, Durchflusskühlplatten 11, 13 und 15, ein zusätzliches Kühlelement 16, ein Kühler mit Ventilator 18, ein Durchflussmesser 20 und ein Ausgleichsbehälter 22 geschaltet sind. Als Kühlmittel wird Wasser verwendet, welches die vorgenannten Elemente des Kühlsystems der Reihe nach durchfließt. Bei den Durchflusskühlplatten 11, 13 und 15 handelt es sich um an die jeweilig zu kühlenden Elemente, nämlich die CPU-Einheit 10, die Festplatte 12 und die Anzeigeeinheit 14, angepasste Durchflusskühlplatten, welche an einer Fläche dieser Elemente in gut Wärme übertragender Weise angeordnet sind. Im Gehäuse 26 ist ferner ein zusätzliches Kühlelement 16 ohne direkte Verbindung mit einem Bauteil der Steuerung angeordnet. Dieses Kühlelement dient zur Kühlung des Innenraums.

Im Gehäuse 26 der Steuerung sind insgesamt die Pumpe 24, die Elemente 10, 12 und 14 der Steuereinrichtung und die Kühlelemente 11, 13, 15 und 16 angeordnet. Außerhalb des Gehäuses 26 ist der Kühler 18 mit Ventilator befestigt sowie vorliegend der Durchflussmesser 20 und der Ausgleichsbehälter 22.

Beim Betrieb des Kühlsystems nehmen die Durchflusskühlplatten 11, 13 und 15 die von den jeweiligen Elementen 10, 12 und 14 generierte Wärme unmittelbar, und die Kühlplatte 16 die im Innenraum des Gehäuses 26 herrschende Wärme, auf und transportieren diese über das Kühlmedium Wasser und den Kühlkreislauf zu dem Kühler 18, dessen Leistung beispielsweise mittels des Ventilators bestimmt und eingestellt werden kann.

Der Durchflussmesser 20 bietet eine Überwachungsmöglichkeit für die Funktionsfähigkeit des Kühlsystems. Durch Überwachung des von ihm generierten elektrischen Signals kann ein eventueller Ausfall festgestellt werden.

Insgesamt erreicht man mit dem vorgenannten Kühlsystem neben der Sicherstellung der Schutzanforderungen sowie der Kühlleistungen auch bei kleinen Temperaturdifferenzen eine erhöhte Betriebssicherheit, eine höhere Lebensdauer der Bauteile der Steuerung und erweiterte Einsatzbereiche bezüglich der Umgebungstemperaturen.

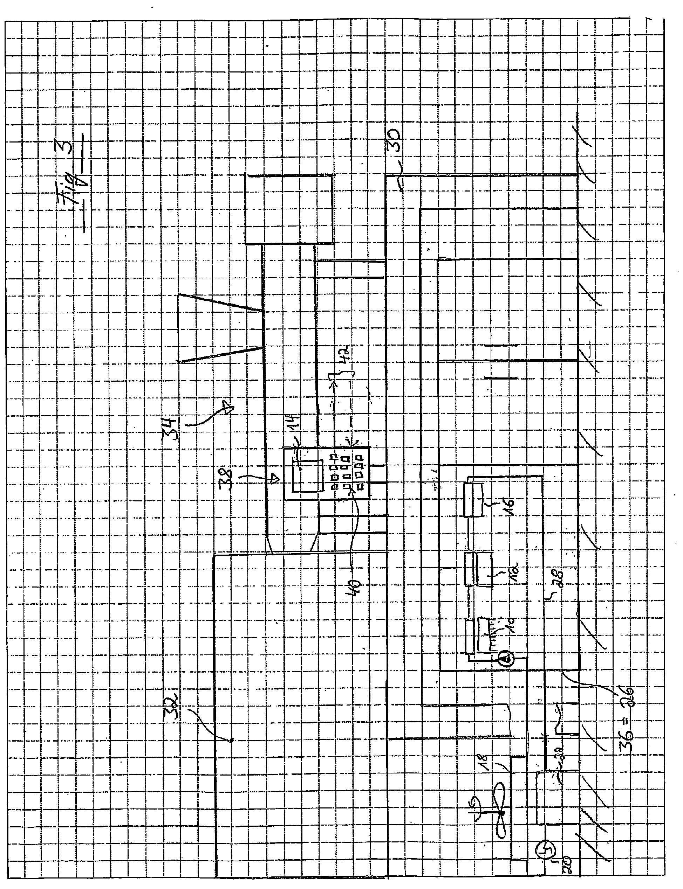

Eine Abwandlung ist in der Figur 3 schematisch dargestellt. Demgemäß sind die CPU 10, die Festplatte 12 und das zusätzliche Kühlelement 16 in der linken Hälfte des Schaltschranks 36 untergebracht, der die Funktion des wassergeschützten Gehäuses 26 übernimmt. Dabei kann der Schaltschrank als Ganzes die oben genannten Normen für ein wassergeschütztes Gehäuse erfüllen oder ein in sich geschlossener Teil, in dem die zuvor genannten Teile der Steuereinrichtung untergebracht sind, also beispielsweise die linke Hälfte. Der besseren Darstellung wegen sind die linke Hälfte des Schaltschranks in geöffnetem Zustand und der Kühlkreislauf mit den zu kühlenden Bauteilen übertrieben groß dargestellt. Das Bedienterminal 38 umfasst in diesem Fall nur noch die Anzeigeeinheit 14 und eine Tastatur 40 sowie elektronische Bauteile für den Betrieb und die Steuerung des Bedienterminals. Es ist auch möglich, die Anzeigeeinheit 14 als Touchscreen auszuführen, so dass auf eine separate Tastatur 40 verzichtet werden kann. Bedarfsweise kann das Bedienterminal mit einem zusätzlichen Kühlsystem 42 der vorbeschriebenen Art ausgestattet werden, insbesondere wenn die elektronischen Bauteile für den Betrieb des Bedienterminals eine relativ große Verlustwärme erzeugen oder wenn die Umgebungstemperaturen beim Betrieb der Spritzgießmaschine vergleichsweise hoch sind. Dieses optionale Kühlsystem 42 ist durch die gestrichelten Linien in der Figur 3 angedeutet.

Die erfindungsgemäße wassergekühlte Steuereinrichtung ist vorliegend anhand einer Spritzgießmaschine beschrieben worden. Eine solche wassergekühlte Steuereinrichtung kann jedoch auch bei einer Extrusionsanlage oder bei beliebigen Werkzeugmaschinen vorgesehen werden.

### Bezugszeichenliste

- 10: CPU-Einheit
- 11: Durchflusskühlplatte
- 12: Festplatte
- 13: Durchflusskühlplatte
- 14: Anzeigeeinheit
- 15: Durchflusskühlplatte
- 16: Kühlelement
- 18: Kühler, gegebenenfalls mit Ventilator
- 20: Durchflussmesser
- 22: Ausgleichsbehälter
- 24: Pumpe
- 26: Gehäuse
- 28: Kühlkreislauf
- 30: Maschinenbett
- 32: Schließeinheit
- 34: Plastifizier- und Einspritzeinheit
- 36: Schaltschrank
- 38: Bedienterminal
- 40: Tastatur
- 42: Optionaler zusätzlicher Kühlkreislauf

## Patentansprüche

1. Steuereinrichtung für eine Spritzgießmaschine, umfassend zumindest eine CPU-Einheit (10), sowie eine Anzeigeeinheit (14), wobei einzelne Teile der Steuereinrichtung in einem wassergeschützten Gehäuse (26) mindestens gemäß der Norm IP X1 tropfwassergeschütz, vorzugsweise mindestens gemäß IP X4 spritzwassergeschützt, angeordnet sind, wobei
- zumindest ein innerhalb des Gehäuses (26) angeordnetes Kühlelement (11, 13, 15, 16) vorgesehen ist, **dadurch gekennzeichnet,**
- **dass** eine Pumpe (24) vorgesehen ist,
- **dass** außerhalb des Gehäuses (26) ein Kühler (18) vorgesehen ist,
- und **dass** ein Kühlkreislauf (28) mit einem Kühlmittel die Pumpe (24), die Kühlelemente (11, 13, 15, 16) und den Kühler (18) miteinander verbindet.

2. Steuereinrichtung nach Anspruch 1, **dadurch gekennzeichnet, dass** an zumindest einem zu kühlenden Element der Steuerung (10, 12, 14) eine Kühlplatte (11, 13, 15) als Kühlelement vorgesehen ist.

3. Steuereinrichtung nach Anspruch 2, **dadurch gekennzeichnet, dass** für die Anzeigeeinheit (14) eine Kühlplatte (15) vorgesehen ist.

4. Steuereinrichtung nach einem der vorhergehenden Ansprüche, **dadurch gekennzeichnet, dass** ein Durchflussmesser (20) im Kühlkreislauf (28) angeordnet ist.

5. Steuereinrichtung nach einem der Ansprüche 1 bis 4, **dadurch gekennzeichnet, dass** dass die einzelnen Teile der Steuereinrichtung in einem Bedienterminal (38) untergebracht sind und dass das Gehäuse des Bedienterminals (38) das wassergeschützte Gehäuse (26) bildet.

6. Steuereinrichtung nach einem der Ansprüche 1 bis 4, **dadurch gekennzeichnet, dass** dass einzelne Teile der Steuereinrichtung in dem wassergeschützten Gehäuse (26) untergebracht sind, wobei dieses Gehäuse (26) ganz oder teilweise von einem Schaltschrank (36) gebildet wird, und dass ein separates Bedienterminal (38) vorgesehen ist, das die Anzeigeeinheit (14) aufweist.

7. Steuereinrichtung nach Anspruch 6, **dadurch gekennzeichnet, dass** das Gehäuse des Bedienterminals (38) ein wassergeschütztes Gehäuse mindestens gemäß der Norm IP X1 (tropfwassergeschützt), vorzugsweise mindestens gemäß IP X4 (spritzwassergeschützt), ist.

8. Steuereinrichtung nach Anspruch 6 oder 7, **dadurch gekennzeichnet, dass** dass ein erster Kühlkreislauf (28) in dem Schaltschrank und ein zweiter Kühlkreislauf (42) für die Anzeigeeinheit (14) vorgesehen sind.

9. Steuereinrichtung nach Anspruch 6 oder 7, **dadurch gekennzeichnet, dass** dass die Anzeigeeinheit (14) in dem Bedienterminal (38) und die im Schaltschrank angeordnete CPU (10) an einen gemeinsamen Kühlkreislauf angeschlossen sind.

10. Steuereinrichtung nach einem der vorangehenden Ansprüche, **dadurch gekennzeichnet, dass** der Kühler (18) separat von der Pumpe (24) vorgesehen ist.

## Claims

1. Control device for an injection moulding machine, comprising at least one CPU unit (10) and a display unit (14), wherein individual parts of the control device are arranged in a waterproof housing (26), at least drip-proof in accordance with the standard IP X1, preferably at least splash-proof in accordance with IP X4, wherein at least one cooling element (11, 13, 15, 16) is provided, arranged inside the housing (26), **characterized in that**
- a pump (24) is provided,
- a cooler (18) is provided outside the housing (26),
- and a cooling circuit (28) with a coolant connects the pump (24), the cooling elements (11, 13, 15, 16) and the cooler (18) with each other.

2. Control device according to Claim 1, **characterized in that** a cooling plate (11, 13, 15) is provided as cooling element on at least one element of the control (10, 12, 14) which is to be cooled.

3. Control device according to Claim 2, **characterized in that** a cooling plate (15) is provided for the display unit (14).

4. Control device according to one of the preceding claims, **characterized in that** a flow rate meter (20) is arranged in the cooling circuit (28).

5. Control device according to one of Claims 1 to 4, **characterized in that** the individual parts of the control device are housed in an operation terminal (38) and that the housing of the operation terminal (38) forms the waterproof housing (26).

6. Control device according to one of Claims 1 to 4, **characterized in that** individual parts of the control device are accommodated in the waterproof housing (26), wherein this housing (26) is formed in whole or in part by a switch cabinet (36), and that a separate operation terminal (38) is provided, which has the display unit (14).

7. Control device according to Claim 6, **characterized in that** the housing of the operation terminal (38) is a waterproof housing at least in accordance with the standard IP X1 (drip-proof), preferably at least in accordance with IP X4 (splash-proof).

8. Control device according to Claim 6 or 7, **characterized in that** a first cooling circuit (28) is provided in the switch cabinet and a second cooling circuit (42) is provided for the display unit (14).

9. Control device according to Claim 6 or 7, **characterized in that** the display unit (14) in the operation terminal (38) and the CPU (10) arranged in the switch cabinet are connected to a shared cooling circuit.

10. Control device according to one of the preceding claims, **characterized in that** the cooler (18) is provided separately from the pump (24).

## Revendications

1. Dispositif de commande pour une machine de moulage par injection, comprenant au moins une unité de CPU (10), ainsi qu'une unité d'affichage (14), dans lequel des parties individuelles du dispositif de commande sont disposées dans un boitier protégé contre l'eau (26) au moins selon la norme IP X1 « Protégé contre les gouttes d'eau », de préférence au moins selon la norme IP X4 « Protégé contre les projections d'eau », dans lequel
- au moins un élément de refroidissement (11, 13, 15, 16) disposé à l'intérieur du boitier (26) est prévu, **caractérisé en ce**
- **qu'**une pompe (24) est prévue,
- **qu'**un refroidisseur (18) est prévu en-dehors du boitier (26),
- et **qu'**un circuit de refroidissement (28) avec un réfrigérant relie l'un à l'autre la pompe (24), les éléments de refroidissement (11, 13, 15, 16) et le refroidisseur (18).

2. Dispositif de commande selon la revendication 1, **caractérisé en ce qu'**une plaque de refroidissement (11, 13, 15) est prévue comme élément de refroidissement sur au moins un élément à refroidir de la commande (10 12, 14).

3. Dispositif de commande selon la revendication 2, **caractérisé en ce qu'**une plaque de refroidissement (15) est prévue pour l'unité d'affichage (14).

4. Dispositif de commande selon l'une des revendications précédentes, **caractérisé en ce qu'**un débitmètre (20) est disposé dans le circuit de refroidissement (28).

5. Dispositif de commande selon l'une des revendications 1 à 4, **caractérisé en ce que** les différentes parties du dispositif de commande sont placées dans un terminal de commande (38) et que le boîtier du terminal de commande (38) forme le boitier protégé contre l'eau (26).

6. Dispositif de commande selon l'une des revendications 1 à 4, **caractérisé en ce que** différentes parties du dispositif de commande sont placées dans le boitier (26) protégé contre l'eau, sachant que ce boitier (26) est formé en totalité ou en partie par une armoire de distribution (36) et qu'un terminal de commande (38) séparé est prévu qui présente l'unité d'affichage (14).

7. Dispositif de commande selon la revendication 6, **caractérisé en ce que** le boitier du terminal de commande (38) est un boitier protégé contre l'eau au moins selon la norme IP X1 (Protégé contre les gouttes d'eau verticales), de préférence au moins selon la norme IP X4 (Protégé contre les projections d'eau).

8. Dispositif de commande selon la revendication 6 ou 7, **caractérisé en ce qu'**un premier circuit de refroidissement (28) est prévu dans l'armoire de distribution et qu'un deuxième circuit de refroidissement (42) est prévu pour l'unité d'affichage (14).

9. Dispositif de commande selon la revendication 6 ou 7, **caractérisé en ce que** l'unité d'affichage (14) dans le terminal de commande (38) et la CPU (10) disposée dans l'armoire de commande sont raccordées sur un circuit de refroidissement commun.

10. Dispositif de commande selon la revendication précédentes, **caractérisé en ce que** le refroidisseur (18) est prévu séparément de la pompe (24).
